# EUROPEAN PATENT SPECIFICATION

(11) **EP 0 607 242 B1**
(45) Date of publication and mention of the grant of the patent: **15.11.1995**
(21) Application number: 92921148.0
(22) Date of filing: 12.10.1992
(51) Int. Cl.: F01N 3/20, F01N 3/28

(54) **EXHAUST SYSTEM**
ABGASSYSTEM
SYSTEME D'ECHAPPEMENT

(30) Priority: 11.10.1991 GB 9121597; 09.11.1991 GB 9123869
(43) Date of publication of application: 27.07.1994
(73) Proprietor: FORD MOTOR COMPANY LIMITED, Brentwood, Essex CM13 3BW (GB); FORD-WERKE AKTIENGESELLSCHAFT, 50725 Köln (DE); FORD MOTOR COMPANY, Dearborn, MI 48126 (US); FORD FRANCE S. A., 92506 Rueil-Malmaison Cédex (FR)
(72) Inventor: MA, Thomas, Tsoi-Hei 1 Collingwood Road, Essex CM3 5YB (GB)
(74) Representative: Messulam, Alec Moses
(86) International application number: GB9201855
(87) International publication number: WO9307365

(56) References cited:
- WO-A-92/08883
- DE-A- 2 129 023
- DE-A- 2 333 092
- PATENT ABSTRACTS OF JAPAN vol. 6, no. 232 (M-172) 18 November 1982 & JP,A,57 131 957 (MATSUSHITA DENKI SANGYO KK) 16 August 1982
- PATENT ABSTRACTS OF JAPAN vol. 6, no. 232 (M-172) 18 November 1982 & JP,A,57 131 912 (MATSUSHITA DENKI SANGYO KK) 16 August 1982

## Description

### Field of the invention

The present invention relates to an exhaust system for an internal combustion engine.

### Background of the invention

It is known to use a catalytic converter in the exhaust system of an internal combustion engine in order to reduce the noxious emissions in the exhaust gases. A problem with catalytic converters is that they do not operate efficiently until the catalyst reaches the so-called light-off temperature and therefore during cold starts, when the engine emissions are at their worst, the catalytic converter does little to reduce the undesirable emissions.

It has also been previously proposed, see for example EP-A-0 588 887 (not prepublished) to provide an afterburner in the exhaust system of an internal combustion engine in order to heat the catalytic converter so as to reduce the time it takes to reach its light-off temperature. The flame in the afterburner heats up the front face of the matrix in the converter but the heat is localised to this area for some time. As this portion of the matrix is subjected to the most severe conditions, its catalyst is the most prone to contamination and therefore when the catalytic converter ages, raising the temperature of its front face does not have the desired effect of reducing the time taken for it to become effective.

### Summary of the invention

According to the present invention, there is provided an exhaust system for an internal combustion comprising a catalytic converter having an outer housing, two or more matrices in the housing, each defining passages for the exhaust gases and carrying particles of a catalyst, the matrices being arranged in series with one another in the direction of flow of engine exhaust gases through the converter, and a chamber disposed between the two matrices, characterised in that an igniter is arranged within the chamber to ignite the gaseous mixture that comprises only the gases that have passed through the first of the two matrices, the mixture burning as a flame within the chamber to form an afterburner for heating the second of the matrices in order to reduce the time taken for the second of the two matrices to reach its light-off temperature.

It is well known, see for example DE-OS-23 33 092, to form a catalytic converter of two separate matrices, or bricks as they are sometimes called. These bricks have the form of a ceramic honeycomb which is coated with a washcoat.
Particles of a catalyst, usually platinum, are embedded in the surface of the matrix, the design of the matrix being intended to maximise the surface area over which the catalytic reaction takes place.

The present invention proposes using the chamber between the two bricks of such a catalytic converter as an afterburner chamber. In this way, the afterburner heats the second brick instead of the first and therefore takes advantage of the fact that the catalyst in the second brick is less prone to contamination.

In an exhaust afterburner, a flame is ignited which requires control in the same way as any other flame. In the absence of proper control, the flame can burn erratically or it can be extinguished by the exhaust gases passing over it. There is also a risk of the flame blowing back from the afterburner chamber towards the combustion chambers of the engine.

In the present invention, however, the presence of the first brick upstream of the afterburner chamber helps to stabilise the flame. The brick diffuses and reduces the speed of the stream of exhaust gases from the engine to prevent the flame from being blown out. The first brick also acts as a flame holder to stabilise combustion within the flame and prevent it from flaring.

In a preferred embodiment of the invention, a flame guard is arranged upstream of and in close proximity to the igniter, the flame guard comprising at least one elongate narrow strip spanning the width if the chamber between the bricks. Preferably, the strip is in the form of a V-shaped channel with the vertex of the V pointing upstream.

Advantageously, the flame guard is formed of a plurality of strips which intersect one another.

The flame guard acts as a shield against the flow of gases through the afterburner creating in its wake regions of low velocity but high turbulence which are easily ignitable and which are not blown out by the main flow. The flame initiated at the igniter easily spreads across the regions behind the flame guard and passes from one strip to another at any intersection between flame guard strips. Thus, when the main gas stream burns as a flame, the base of the flame is not localised to the igniter but it stretches instead over the entire length of the strips of the flame guard.

Because the flame in the main gas stream has a wide and distributed base, its tip does not need to spread laterally very far to cover the entire cross section of the afterburner.

The invention also offers the advantage of compactness in that a combined catalytic converter and afterburner need not be much larger than a conventional converter alone. This not only makes packaging simpler but reduces the precautions that need to be taken against fire. It should be born in mind that both the converter and the afterburner would at different times reach elevated temperatures.in conventional system and both would need to be shielded. If the two are combined then no extra precautions need to be taken on account of the presence of the afterburner between the bricks of the converter.

### Brief description of the drawing

The invention will now be described further, by way of example, with reference to the accompanying drawing in which:
Figure 1 shows schematically an engine having an exhaust system that comprises a combined catalytic converter and afterburner,
Figure 2 is an isometric view of part of the interior of a catalytic converter, and
Figure 3 is a section through a catalytic converter of a preferred embodiment of the invention.

### Detailed description of the invention

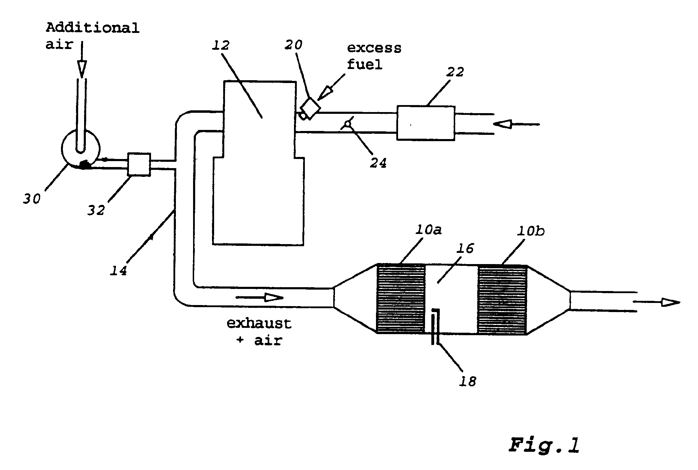

In Figure 1, an engine 12 is supplied with air by an inlet manifold which incorporates an air metering unit 22, a butterfly throttle 24 and a fuel injector 20. The exhaust pipe 14 from the engine leads to atmosphere by way of a combined catalytic converter and afterburner housed in the same unit and comprising two bricks 10a and 10b separated from one another by an afterburner chamber 16 in which there is arranged a spark igniter 18.

Air can be added to the exhaust gases from the engine from a branch of the exhaust pipe containing an air pump 30 and a control valve 32.

The afterburner 16 is brought into operation only when the catalyst is below its light-off temperature. To do this, the engine is operated with a rich mixture to ensure that the exhaust gases contain hydrogen and additional air is pumped in by the pump 30 to ensure that the mixture in the afterburner chamber 16 is ignitable. If the catalyst is completely cold, a combustion charge having a fuel to air equivalence ratio of more than 1.7 may be required for this purpose but at higher temperature, if a cool flame reaction is already taking place in the gases, a weaker mixture strength suffices. At the same time, the additional air is also regulated to ensure that the mixture in the afterburner chamber 16 is stoichiometric.

Having provided the afterburner chamber 16 with an ignitable and combustible mixture, the next step required is to create a series of sparks in the chamber by means of the spark igniter 18 for setting the mixture alight and creating a flame for heating the second brick 10b. Once the brick 10b reaches its light-off temperature, the afterburning can be discontinued. The effect of the afterburner is not only to heat the second brick 10b of the catalytic converter but to reduce undesirable emissions prior to light-off of the converter.

If desired a sensor may be placed in the afterburner chamber to detect the presence of a flame of the radiation emitted from the front face of the second brick 10b of the catalytic converter. Such a sensor may be used to control the mixture strength and quantity of additional air in a control loop for the afterburner.

The embodiment of the invention described in Figure 1 offers the advantage of compactness and reduced cost. The flame of the afterburner burns more steadily because the first brick 10a acts as a diffuser and flame holder. The risk of the flame blowing back into the engine is also reduced. Also as compared with prior art proposals to heat the front face of the first brick using a separate afterburner, the invention offers the advantage that the region of the converter first brought into operation by the afterburner is one which is protected by the first brick and is therefore less prone to contamination.

Referring now to Figure 3, in which a catalytic converter of a preferred embodiment of the invention is shown in more detail, the housing of the catalytic converter has an intake section 110 and an exit section 120. Between these two sections, the housing contains two matrix bricks 112 and 114 separated from one another by an afterburner combustion chamber 116 in which there is arranged an igniter 122.

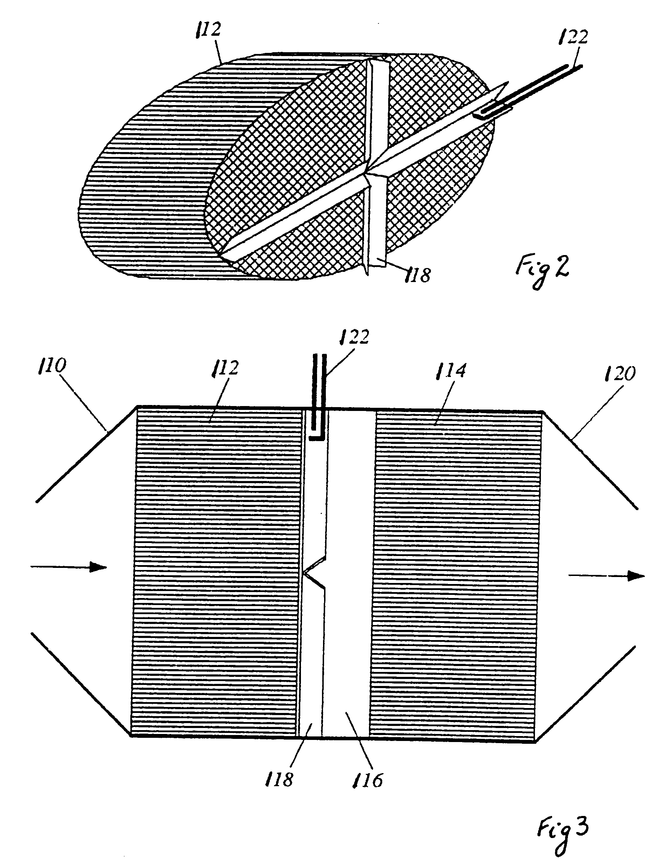

In the present embodiment, a flame guard 118 is arranged upstream of, and in close proximity to, the igniter 122. The flame guard 118, which is better shown in Figure 2, comprises four V-shaped strips radiating from the centre of the catalytic converter, with the vertices of the V-sections pointing upstream. The outer ends of the strips are secured to the housing of the catalytic converter and if desired the igniter 122 may consist of a single insulated electrode arcing across to the flame guard 118.

In the absence of a flame guard 18, when a spark is created at the igniter 22 it ignites the mixture and a flame is started at the igniter 22. It is essential however that the flame spread over the entire area of the front face of the brick 14 otherwise unignited gases will enter the brick, and once inside the brick, the design of the passages in the brick prevents the flame from spreading within the matrix brick 114.

To give the flame the opportunity to spread over the cross section of the converter one must either make the afterburner chamber 116 very long or initiate several flames at the same time, distributed over the area of the chamber 116, for example by using several igniters.

The provision of a flame guard 118 has the same effect as positioning separate igniters along the length of each V-shaped strip. As the exhaust gas and additional air mixture is diverted around the strips it forms a wake in which the mean gas velocity is very low but in which vortices are set up by the gases pouring over the edges of the strips. These conditions are ideal for stable ignition and when the single igniter 122 is fired it will light a flame, the base of which will instantly spread to cover the area of the flame guard. If the strips are arranged in the form of a star or a regular matrix then the flame will spread at each intersection from one strip to the next, ensuring that the flame spreads over the surface of the brick 112. If too many guard strips are provided, they risk obstructing the gas flow and in practice a compromise must be reached between the length of the afterburner chamber 116 and the obstruction presented to the exhaust gas flow by the flame guard.

Because the combustion flame cannot spread laterally through the exhaust gases after they have entered the matrix brick, it is important to ensure that the flame covers the entire front face of the brick. This does not however mean that the combustion of the exhaust gas and additional air mixture must be complete at the time the gases reach the front face of the brick as combustion can continue after ignition within the passages of the catalytic matrix brick.

Shortening the afterburner chamber 116 to achieve such combustion within the matrix is desirable only from the point of view of compactness but because it offers two further advantages. If combustion is complete before the gases reach the matrix, the temperature of the gases may be in excess of the temperature that the catalyst can safely withstand. By allowing the combustion to continue within the passages of the matrix brick, not only is the initial temperature of the gases lowered to safe values but the further heat emitted during the continued combustion is spread over some distance within the matrix brick and is used to light-off the converter more uniformly.

The invention can also be applied to system having more than two catalytic matrix bricks in series with one another and such a construction is advantageous in that the chamber between the second and third bricks can promote lateral spreading of the flame, if for any reason the flame does not succeed in covering the entire front face of the second matrix brick.

## Claims

1. An exhaust system for an internal combustion comprising a catalytic converter having an outer housing (110,120), two or more matrices (112,114) in the housing, each defining passages for the exhaust gases and carrying particles of a catalyst, the matrices (112,114) being arranged in series with one another in the direction of flow of engine exhaust gases through the converter, and a chamber (116) disposed between the two matrices, characterised in that an igniter (122) is arranged within the chamber to ignite the gaseous mixture that comprises only the gases that have passed through the first of the two matrices, the mixture burning as a flame within the chamber to form an afterburner for heating the second of the matrices in order to reduce the time taken for the second of the two matrices to reach its light-off temperature.

2. An exhaust system as claimed in claim 1, characterised in that a flame guard (118) is arranged upstream of and in close proximity to the igniter (122), the flame guard comprising at least one elongate narrow strip spanning the afterburner chamber.

3. An exhaust system as claimed in claim 2, wherein the narrow strip is in the form of a V-shaped channel, the vertex of the V pointing upstream.

4. An exhaust system as claimed in claim 2 or 3, wherein the flame guard is formed of a plurality of strips which intersect one another.

5. An exhaust system as claimed in any of claims 2 to 4, wherein the length of the afterburner chamber is such that the ignited regions of the exhaust gases extend over the entire front face of the second catalytic matrix brick but combustion of the gases is only completed within the internal passages of the second matrix brick.

## Patentansprüche

1. Abgassystem für eine Brennkraftmaschine, mit einem katalytischen Wandler mit einem äußeren Gehäuse (110, 120), zwei oder mehr in dem Gehäuse angeordneten Matrizen (112, 114), welche jeweils Durchgänge für die Abgase bilden und Teilchen eines Katalysatorstoffes tragen, wobei die Matrizen (112, 114) in Strömungsrichtung der Abgase von dem Motor durch den Wandler hindurch in Reihe hintereinander angeordnet sind, und mit einer zwischen den beiden Matrizen angeordneten Kammer (116),
dadurch gekennzeichnet, daß eine Zündvorrichtung (122) innerhalb der Kammer angeordnet ist, um das Gasgemisch zu zünden, das nur diejenigen Gase enthält, die die erste der beiden Matrizen durchströmt haben, wobei das Gemisch unter Bildung einer Flamme innerhalb der Kammer verbrennt und so einen Nachbrenner bildet, der die zweite der beiden Matrizen aufheizt, um so den Zeitraum zu verkürzen, der erforderlich ist, bis die zweite der beiden Matrizen ihre Zündtemperatur erreicht hat.

2. Abgassystem nach Anspruch 1, dadurch gekennzeichnet, daß eine Flammensperre (118) stromoberhalb der Zündvorrichtung (122) und in unmittelbarer Nähe dazu angeordnet ist, wobei die Flammensperre wenigstens einen länglichen schmalen Streifen aufweist, der sich über die Nachbrennerkammer erstreckt.

3. Abgassystem nach Anspruch 2, worin der schmale Streifen in Form eines V-förmigen Hohlprofils vorliegt, wobei die Spitze des V stromaufwärts weist.

4. Abgassystem nach Anspruch 2 oder 3, worin die Flammensperre von einer Mehrzahl von sich schneidenden Streifen gebildet wird.

5. Abgassystem nach einem beliebigen der Ansprüche 2 bis 4, worin die Länge der Nachbrennerkammer so gestaltet ist, daß sich die gezündeten Bereiche der Abgase über die gesamte Frontfläche des zweiten katalytischen Matrixmonolithen verteilen, die Verbrennung der Gase jedoch erst innerhalb der inneren Durchgänge des zweiten Matrixmonolithen abgeschlossen wird.

## Revendications

1. Système d'échappement pour un moteur à combustion interne comprenant un pot catalytique comportant un boîtier extérieur (110, 120), deux matrices ou plus (112, 114) dans le boîtier, chacune définissant des passages pour les gaz d'échappement et portant des particules d'un catalyseur, les matrices (112, 114) étant disposées à la suite l'une de l'autre dans le sens de l'écoulement des gaz d'échappement du moteur à travers le pot, et une chambre (116) disposée entre les deux matrices, caractérisé en ce qu'un allumeur (122) est disposé à l'intérieur de la chambre afin d'enflammer le mélange gazeux qui ne comprend que les gaz qui sont passés à travers la première des deux matrices, le mélange brûlant sous forme de flamme à l'intérieur de la chambre pour former un dispositif de postcombustion destiné à chauffer la seconde des matrices afin de réduire le temps que met la seconde des deux matrices à atteindre sa température d'amorçage.

2. Système d'échappement selon la revendication 1, caractérisé en ce qu'un protège-flamme (118) est disposé en amont de l'allumeur (122) et à proximité immédiate de celui-ci, le protège-flamme comprenant au moins une bande étroite allongée s'étendant sur toute la largeur de la chambre de postcombustion.

3. Système d'échappement selon la revendication 2, dans lequel la bande étroite prend la forme d'un profilé en V, la pointe du V étant orientée vers l'amont.

4. Système d'échappement selon la revendication 2 ou 3, dans lequel le protège-flamme est formé d'une pluralité de bandes qui s'intersectent.

5. Système d'échappement selon l'une quelconque des revendications 2 à 4, dans lequel la longueur de la chambre de postcombustion est telle que les régions enflammées des gaz d'échappement s'étendent sur la face avant entière de la seconde brique de matrice catalytique mais que la combustion des gaz ne se termine qu'à l'intérieur des passages intérieurs de la seconde brique de matrice.
